# EUROPEAN PATENT SPECIFICATION

(11) **EP 3 177 690 B1**
(45) Date of publication and mention of the grant of the patent: **04.09.2019**
(21) Application number: 15733771.8
(22) Date of filing: 06.07.2015
(51) Int. Cl.: C09G 1/02, C09G 1/04, C11D 3/14, C11D 3/37, C11D 3/40, C11D 7/02, C11D 7/20

(54) **HARD SURFACE TREATMENT COMPOSITION**
ZUSAMMENSETZUNG ZUR BEHANDLUNG HARTER OBERFLÄCHEN
COMPOSITION DE TRAITEMENT DE SURFACE DURE

(30) Priority: 05.08.2014 WO PCT/CN2014/083665; 22.09.2014 EP 14185763
(43) Date of publication of application: 14.06.2017
(73) Proprietor: Unilever NV, 3013 AL Rotterdam (NL); Unilever PLC, London, Greater London EC4Y 0DY (GB)
(72) Inventor: TAO, Qingsheng, Shanghai 200335 (CN); ZHONG, Ye, Shanghai 200335 (CN); ZHOU, Yi, Shanghai 200335 (CN)
(74) Representative: Corsten, Michael Allan
(86) International application number: PCT/EP2015/065342
(87) International publication number: WO 2016/020130

(56) References cited:
- WO-A1-2009/040597
- US-A- 5 154 759
- US-A1- 2011 132 227
- US-A1- 2013 344 777
- ROSSI S ET AL: "Reduction of aesthetical properties of organic coatings caused by mechanical damage", MATERIALS AND DESIGN, LONDON, GB, vol. 30, no. 5, 1 May 2009 (2009-05-01), pages 1511-1517, XP025958114, ISSN: 0261-3069, DOI: 10.1016/J.MATDES.2008.08.001 [retrieved on 2008-08-08]

## Description

### Field of the invention

The present invention relates to a hard surface treatment composition. In particular, the composition comprises particle having average diameter of no greater than 3 microns; non-volatile silicone; and at least 30% of water by weight of the composition, wherein the weight ratio of the particle to the non-volatile silicone is at least 3:1. This invention also relates to a method and use for providing shine, smoothness, repair and/or less damage to a hard surface.

### Background of the invention

New appliances in home and office are always shining and appealing. To maintain the surface cleanliness, hard surface treatment compositions have been widely employed for a long time. When cleaning the hard surface, rubbing may be needed to help remove tougher soils. In addition, daily use of the appliances may also affect the glossiness, smoothness, and shining of the hard surface.

Therefore, even if the hard surfaces are cleaned regularly, scratches on hard surface may be formed along with time because of wear for daily use and/or abrasion during the cleaning process. Thus the glossiness of the hard surface will be decreased, perceivable marks may be found, and the hard surface is not as shining and appealing as it was new. Sometime, the abrasive in the composition may help to improve the gloss of damaged hard surface, however, it may also bring damage to new/ smooth hard surface.

The present inventors have recognized the needs to develop a hard surface treatment composition which can deliver the benefits of surface repair, surface shining, and/or surface smoothness while having less damage to the new/smooth hard surface. A composition comprising particle having average diameter of no greater than 3 microns; non-volatile silicone; and at least 30% of water by weight of the composition, wherein the weight ratio of the particle to the non-volatile silicone is at least 3:1, was therefore developed. It was surprisingly found that such composition improved the surface gloss of the damaged hard surface, and generally didn't reduce the surface gloss of new/smooth hard surface.

US 2011/0132227 describes aqueous based gel wax formulations comprising a cationic microemulsion of wax particles having an overage size of less than 200 nm and anionically charged polishing particles having an average size of less than 200nm, possibly comprising further a quaternary ammonium substituted silicone.

### Summary of the invention

In a first aspect, the present invention provides a composition comprising particle having average diameter of no greater than 3 microns; non-volatile silicone; and at least 30% of water by weight of the composition, wherein the weight ratio of the particle to the non-volatile silicone is at least 3:1.

In a second aspect, the present invention provides a method for providing shine, smoothness, repair and/or less damage to a hard surface comprising a step of contacting the surface with a composition comprising particles having average diameter of no greater than 3 microns, and non-volatile silicones.

In a third aspect, the present invention provides use of a composition comprising particles having average diameter of no greater than 3 microns, and non-volatile silicones for surface shine, surface smoothness, surface repair, less damage, or a combination thereof.

All other aspects of the present invention will more readily become apparent upon considering the detailed description and examples which follow.

### Detailed description of the invention

Except in the examples, or where otherwise explicitly indicated, all numbers in this description indicating amounts of material or conditions of reaction, physical properties of materials and/or use may optionally be understood as modified by the word "about".

All amounts are by weight of the total composition, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

"Hard surface" of present invention generally refers to any surface in household including the window, kitchen, bathroom, toilet, furniture, or floor including windows, mirrors, sinks, basins, toilet bowls, baths/shower trays, wall tiles, floor tiles, cooker tops, oven interiors, cookware, washing machine drums, cooker hoods, extractor fans. These surfaces, for example, may be made of glass, glazed ceramics, metal, stone, plastics, lacquer, wood, or combination thereof.

"Particle size" as used herein refers to particle diameter in non-aggregated state unless otherwise stated. For polydisperse samples having particulate with diameter no greater than 1 µm, diameter means the z-average particle size measured, for example, using dynamic light scattering (see international standard ISO 13321) with an instrument such as a Zetasizer Nano™ (Malvern Instruments Ltd, UK). For polydisperse samples having particulate with diameter greater than 1 µm, diameter means the apparent volume median diameter (D50, also known as x50 or sometimes d(0.5)) of the particles measurable for example, by laser diffraction using a system (such as a Mastersizer™ 2000 available from Malvern Instruments Ltd) meeting the requirements set out in ISO 13320.

"Non-volatile" as used herein means having vapor pressure from 0 to 0.1 mm Hg (13.3 Pa), preferably from 0 to 0.05 mm Hg, more preferably from 0 to 0.01 mm Hg at 25 °C.

"Viscosity" as used herein means kinematic viscosity at 25°C and is reported as centiStokes (1 cSt = 1 mm²•s⁻¹). Viscosity of fluids such as silicone can be determined, for example, by the relevant international standard, such as ISO 3104.

Typically, the particle comprises polymer, inorganic material, or a combination thereof but preferably, the particle comprises inorganic material and even more preferably the particle is inorganic particle. Preferably, the particle comprises silica, titania, zirconia, alumina, calcium carbonate, silicate clay, or a mixture thereof. More preferably, the particle comprises silica, alumina, calcium carbonate, calcite, kaolin, zirconia, talc, or a mixture thereof. Even more preferably the particle comprises silica, alumina, zirconia, or a mixture thereof and most preferably the particle is alumina coated silica.

In order to better improve the gloss of the hard surface, the particle preferably has a Mohs hardness of at least 3.5, more preferably at least 4.5, even more preferably from 5.5 to 10 and most preferably from 6.5 to 9. Mohs values are based on the hardness of the coated particles. The Mohs scale of mineral hardness is known to the skilled person and characterizes the scratch resistance of various minerals through the ability of a harder material to scratch a softer material.

The particles suitable for use in this invention preferably comprise at least 25% by weight silicon dioxide (i.e., silica), and more preferably, at least 50% by weight silicon dioxide, and most preferably, at least 75% to 100% by weight silicon dioxide, based on total weight of particle and including all ranges subsumed therein.

To obtain optimal shining, smoothing effect and/or less damage to the smooth surface, the particle preferably has an particle size of from 1 nm to 2 µm, more preferably from 5 nm to 1 µm, even more preferably from 15 nm to 500 nm, and most preferably from 30 to 200 nm.

To bring less damage and/or improve gloss, the particle preferably has an average roundness (ratio of axes) of at least 0.3:1, more preferably at least 0.5:1 and even more preferably at least 0.7:1 and most preferably at least 0.85:1. The roundness (ratio of axes) is a measurement of the length/width relationship with value in the range of 0 to 1.

The length is the longest axis and the width is the shortest axis. A perfect circle has a roundness value of 1.0 and a thin rectangle value is approaching 0. To calculate the average roundness, image of particles should be taken, preferably with scanning electron microscopy (SEM), for example using Hitachi S4800. The average roundness is calculated by at least 20 particles in the image.

Suitable silica includes commercially available products from suppliers for example AkzoNobel under the names Bindizl™ CC301, CC302, CC401, 20/40, 50/80, 40/170, 30/360, and Levasil™ CAT80, 300/30. 200/40, 200/30, 100/45, 50/50, 30/50.

Typically, the particle is present in the composition in amount of from 0.01 to 40%, more preferably from 0.1 to 30%, even more preferably from 0.3 to 18%, still even more preferably from 1 to 12%, and most preferably from 3 to 8% by weight of the composition.

For sake of clarity, it should be noted that the particle is different from the non-volatile silicone.

Preferably, the non-volatile silicone is emulsified droplets of silicone. The emulsified non-volatile silicone suitable for use in the compositions of the invention preferably has a D_{3,2} average particle diameter (Sauter mean diameter) in the composition of from 10 nm to 20 microns, preferably from 20 nm to 5 microns, more preferably from 30 to 2 microns, even more preferably from 40 nm to 800 nm, and most preferably from 50 to 200 nm.

Preferably, the non-volatile silicone is present in the composition in amount from 0.005 to 10% by weight of the composition, more preferably from 0.01 to 5%, even more preferably from 0.02 to 3%, still even more preferably from 0.05 to 0.9 %, most preferably from 0.08 to 0.8% by weight of the total composition.

The viscosity of the non-volatile silicone itself (not the emulsion or the final hard surface treatment composition) is typically from 20 to 2,000,000 cSt (centi-Stokes) at 25 °C, more preferably from 100 cSt to 800,000 cSt, even more preferably from 800 to 400,000 cSt, still even more preferably from 4,000 to 30,000 cSt, and most preferably from 8,000 to 15,000 cSt.

The weight-average molecular weight of the non-volatile silicone is preferably from 2,000 to 2,000,000, more preferably from 8,000 to 800,000, even more preferably from 20,000 to 400,000, and most preferably from 50,000 to 150,000 Daltons. The weight-average molecular weight may be measured by following the standard of ASTM D4001-2013.

Suitable non-volatile silicones include polydiorganosiloxane, in particular polydimethylsiloxane which have the CTFA designation dimethicone. Also suitable for use in compositions of the invention are polydimethyl siloxanes having hydroxyl end groups, which have the CTFA designation dimethiconol. Also suitable for use in compositions of the invention are silicone gums having a slight degree of cross-linking, as are described for example in WO 96/31188. A further preferred class of silicones is aminosilicone.

Preferably, the non-volatile silicone comprises dimethicone, dimethiconol, aminosilicone, ether-modified silicone or a combination thereof. More preferably, the non-volatile silicone comprises ether-modified silicone, aminosilicone or a mixture thereof. Even more preferably, the non-volatile silicone comprises aminosilicone. By "aminosilicone" is meant a silicone containing at least one primary, secondary or tertiary amine group, or a quaternary ammonium group. Preferably, the aminosilicone is silicone containing at least one primary, secondary, or tertiary amine group. Preferably, the primary, secondary tertiary amine group, and/or quaternary ammonium group is carried by side or pendant group carried by the polymeric backbone. Suitable aminosilicone is described in EP 455,185 (Helene Curtis). The aminosilicone is preferably emulsified with non ionic and/or cationic surfactant.

Preferably, the non-volatile silicone comprises at least 25% of aminosilicone by weight of the total non-volatile silicone, more preferably at least 50% of aminosilicone, and even more preferably at least 75% of aminosilicone by weight of the total non-volatile silicone. Most preferable non-volatile silicone is aminosilicone.

The aminosilicone suitable for use in the present invention may be represented by the formula of:

R¹ₐR₃₋ₐSi-(O-SiR₂)ₘ-(O-SiR_{b}R¹_{2-b})ₙ-O-SiR¹ₐR₃₋ₐ (I)

where:
each R is independently hydrogen, phenyl, OH or a C₁-C₁₀ alkyl group, preferably R is OH or a C₁-C₆ alkyl group and more preferably a C₁-C₆ alkyl group, and most preferably a CH₃ group;
each a is independently an integer from 0 to 3, preferably each a is 0;
each b is an integer from 0 to 1, b may be 2 when a is not 0, preferably b is 0 or 1 and most preferably b is 1;
m and n are integers whereby the sum of n+m ranges from 1 to 3,500, preferably from 10 to 2000 and more preferably from 100 to 1200;
each R¹ is independently a monovalent radical of formula -(CR²₂)ₓL,
where:
   each R² is independently H, OH, OCH₃ or C₁₋₄ alkyl, preferably each R² is independently H, or C₁₋₄ alkyl;
   x is integer from 1 to 10, preferably from 2 to 6;
   and L is an amine or a quaternized amine represented by one of the following groups:

      -NR³-(CR²₂)_{y}-N(R³)₂ (1)

      -N(R³)₂ (2)

      -[N(R³)-(CR²₂)_{y}]_{z}-N(R³)₂, (3)

      -N⁺(R³)₃A⁻ (4)

      -N(R³)-(CR²₂)_{y}-N⁺(R³)₃A⁻, (5)

      -[N(R³)-(CR²₂)_{y}]_{z}-N⁺(R³)₃A⁻, (6)

      -[N⁺(R³)₂-(CR²₂)_{y}]_{z}-N(R³)₂(A⁻)^{z}, (7)

      -[N⁺(R³)-(CR²₂)_{y}]_{z}-N⁺(R³)₃(A⁻)^{z+1}, (8)
   where:
      each R² is independently H, OH, OCH₃ or C₁₋₄ alkyl;
      each R³ is independently hydrogen, phenyl, benzyl or a C₁ to C₁₂ alkyl;
      each y is independently an integer from 1 to 4;
      each z is independently an integer from 1 to 5; and
      each A⁻ is independently anion, preferably fluoride, chloride, bromide or iodide anion.

Preferably, in formula (I), each R is independently OH, or C₁-C₄ alkyl group; each a is 0; b is 1 or 2; m and n are integers wherein the sum of n+m ranges from 30 to 2,000; each R¹ is independently a monovalent radical of formula -(CR²₂)ₓL, where each R² is independently H, or C₁₋₄ alkyl, x is integer from 1 to 4, and L is an amine or a quaternized amine represented by -NR³-(CR²₂)_{y}-N(R³)₂ or N(R³)-(CR²₂)_{y}-N⁺(R³)₃A⁻, where each R² is independently H, or C₁₋₄ alkyl; each R³ is independently hydrogen, or a C₁ to C₄ alkyl; each y is independently an integer from 1 to 4; and each A⁻ is fluoride, chloride, bromide or iodide anion.

More preferably, in formula (I), each R is methyl; each a is 0; b is 1; m and n are integers wherein the sum of n+m ranges from 50 to 1,500; each R¹ is independently a monovalent radical of formula -(CH₂)ₓL, wherein x is integer from 1 to 4, and L is an amine or a quaternized amine represented by -NR³-(CH₂)_{y}-N(R³)₂ or -N(R³)-(CH₂)_{y}-N⁺(R³)₃A⁻, where each R³ is independently hydrogen, or a C₁ to C₄ alkyl; each y is independently an integer from 1 to 4; and each A⁻ is fluoride, chloride, bromide or iodide anion.

Most preferably, in formula (I), each R is methyl; each a is 0; b is 1; m and n are integers wherein the sum of n+m ranges from 80 to 1,000; each R¹ is independently a monovalent radical of formula -(CH₂)₂L, wherein L is an amine or a quaternized amine represented by -NR³-(CH₂)₂-N(R³)₂ or -N(R³)-(CH₂)₂-N⁺(R³)₃A⁻, where each R³ is independently hydrogen, or methyl; and A⁻ is chloride anion.

The mole % amine functionality of the aminosilicone is preferably in the range of from 0.1 to 8%, more preferably from 0.3 to 6% and most preferably from 0.5 to 4%,

Preferably, the aminosilicone is amino functional polysiloxanes having the CTFA designation "amodimethicone".

To have a better surface gloss, appearance and/or hydrophobicity, the weight ratio of the particle to the non-volatile silicone is preferably from 4:1 to 100:1, more preferably from 5:1 to 40:1, even more preferably from 7:1 to 20:1, and most preferably from 8:1 to 15:1.

The hard surface treatment composition of the present invention comprises at least 30% of water by weight of the composition. Preferably, the composition comprises at least 50%, more preferably from 70 to 99%, even more preferably from 77 to 97% and most preferably from 84 and 93% of water by weight of the composition.

Surfactants can for instance advantageously contribute to the cleaning efficacy, the formulation stability, and/or surface gloss of the hard surface treatment composition according to the present invention. Therefore, the hard surface treatment composition may comprise 0.1 to 20 %, more preferably from 0.6 to 12%, even more preferably from 2 to 8%, and still even more preferably from 4 to 6% of one or more surfactants by weight of the total composition.

Any type of surfactant, i.e. anionic, cationic, nonionic, zwitterionic or amphoteric can be used. However, to provide better glossiness to the hard surface, it is preferable that the composition comprise non-ionic, anionic or a mixture thereof. More preferably the composition comprises non-ionic surfactant and most preferably the surfactant in the composition is non-ionic surfactant.

It is preferred that at least 25%, more preferably at least 50%, even more preferably at least 75% and still more preferably at least 90% by weight of the surfactants are nonionic surfactant. Thus, it is preferred that the hard surface treatment composition comprises from 0.1 to 15% preferably from 0.3 to 9%, more preferably from 0.5 to 8 %, and even more preferably from 2 to 6 % of one or more non-ionic surfactants.

A suitable class of nonionic surfactants can be broadly described as compounds produced by the condensation of simple alkylene oxides, which are hydrophilic in nature, with an aliphatic or alkyl-aromatic hydrophobic compound having a reactive hydrogen atom. The length of the hydrophilic or polyoxyalkylene chain which is attached to any particular hydrophobic group can be readily adjusted to yield a compound having the desired balance between hydrophilic and hydrophobic elements. This enables the choice of nonionic surfactants with the right HLB.

Particular examples include:
- the condensation products of aliphatic alcohols having from 8 to 22 carbon atoms in either straight or branched chain configuration with ethylene oxide, such as a coconut alcohol/ethylene oxide condensates having from 2 to 15 moles of ethylene oxide per mole of coconut alcohol;
- condensates of alkylphenols having C₆-C₁₅ alkyl groups with 5 to 25 moles of ethylene oxide per mole of alkylphenol;
- polyoxyethylene sorbitan fatty acid esters, for example polyoxyethylene sorbitan C₆₋₂₄ fatty acid esters;
- alkyl polyglucosides (APG), for example C₈-C₁₆ alkyl polyglycoside, including those from the Glucopon® range, e.g. Glucopon® 425.

It is preferred that the non-ionic surfactants are selected from ethoxylated alkyl alcohols and alkyl polyglucosides. More preferably the surfactants are ethoxylated alkyl alcohols and even more preferably ethoxylated C₈-C₁₂ alkyl alcohols, whereby yet more preferably the average degree of ethoxylation is between 5 and 8. An example of particularly effective (and therefore preferred) surfactants are ethoxylated C₉-C₁₁ alkyl alcohols with an average degree of ethoxylation of 8, including for instance the commercially surfactant Neodol 91-8.

The weight ratio of the particle to the non-ionic surfactant is preferably in the range of 1:10 to 15:1, more preferably from 1:5 to 8:1, even more preferably from 0.4:1 to 3:1.

The composition preferably comprises organic solvents selected from C₁₋₈ alcohol, ether having 2 to 16 carbon atoms, ester of C₂₋₂₄ organic acid; C₆₋₁₈ cyclic terpene, and a mixture thereof. More preferably the composition comprises ethanol, isopropyl alcohol, n-butanol, iso-butanol, n-butoxypropanol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol, soybean oil methyl ester, limonene or a mixture thereof. Even more preferably the composition comprises ethanol, isopropyl alcohol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol, soybean oil methyl ester, limonene or a mixture thereof. Most preferably the composition comprises isopropyl alcohol, dipropylene glycol monobutyl ether, propylene glycol monomethyl ether, propylene glycol monopropyl ether, or a mixture thereof. The organic solvent may be present in the composition in a concentration of 0 to 20%, preferably 0.5-15% by weight of the composition.

The composition may comprise from 0.2 to 1.2% of thickener by weight of the composition. This provides the optimum rheological properties of the composition. Suitable thickeners include the modified celluloses for example hydroxyethyl cellulose.

The hard surface cleaning composition according to the invention may further comprise dyes, perfume, and/or preservatives. If present, the amount may be from 0.001 to 5% by weight of the composition.

The composition preferably has a pH of between 1 and 14, more preferably 3 to12. The pH values referred to herein are measured at a temperature of 25 °C.

In general, the hard surface treatment composition of the invention may have any appearance, ranging from opaque to fully transparent. However, the composition is preferably at least partially transparent or translucent, more preferably transparent. By at least partially transparent or translucent is meant that a 1 cm thick sample of the composition transmits at least 20%, preferably at least 50%, of light having wavelength of 460 nm. By transparent is meant that a 1 cm thick sample of the composition transmits at least 70%, preferably at least 90%, of light having wavelength of 460 nm.

The composition may be packed in any form, but preferably is packaged as a conventional hard surface treatment or cleaning product. The preferred packaging is a spray applicator. Pump dispersers (whether spray or non-spray pumps) and pouring applications (bottles etc) are also possible. It is also possible to impregnate a wipe with the composition.

The present invention also provides a method for providing shining, smoothing, repair and/or less damage to a hard surface comprising a step of contacting the surface with a composition comprising particles having average diameter of no greater than 3 microns, and non-volatile silicones onto the surface. Preferably, the composition is the hard surface treatment composition of the present invention.

The present invention also provides use of a composition comprising particles having average diameter of no greater than 3 microns, and non-volatile silicones for surface shining, surface smoothing, surface repair, or a combination thereof. Preferably, the composition is the hard surface treatment composition of the present invention.

The present invention is illustrated by way of the following non-limiting examples.

### Examples

### Material

- Bindzil CC401 is an aqueous dispersion of colloidal silica supplied by AkzoNobel, having Z-average particle size of 13.1 nm.
- Levasil 30/50 is an aqueous dispersion of colloidal silica supplied by AkzoNobel, having Z-average particle size of 110.7 nm.
- Bindzil CAT80 is an aqueous dispersion of colloidal silica supplied by AkzoNobel, having Z-average particle size of 109.7 nm.
- Dow Corning® 2-8168 emulsion is a microemulsion of amodimethicone supplied by Dow Corning, having Z-average particle size of 76.3 nm
- SF-929A Finishing Agent is polyether-modified silicone supplied by Guangdong BioMax Si&F New Material Co., Ltd.
- Modisurf is block propoxylated and ethoxylated quaternised polyamine, supplied by Croda.
- Sorbosil AC77 is abrasive silica supplied by PQ Corporation, having a weight mean particle size (d₅₀) of 8.1 microns.
- Calcite, 800 grit is abrasive calcium carbonate supplied by Zhangjiajie Hengliang Mining Co. Ltd.

### Example 1

This example demonstrates the gloss increase of damaged hard surface after treatment by composition containing different particles in different concentrations.

The hard surface treatment compositions were prepared following the formulation in Table 1.

**Table 1**

| Chemical name | Trade name | Samples (active% by weight) | | | | | | |
|---|---|---|---|---|---|---|---|---|
| | | 1 | 2 | 3 | 4 | 5 | A | B |
| Primary alcohol ethoxylate | Neodel 91-8 from Shell | 3.50 | 3.50 | 3.50 | 3.50 | 3.50 | 3.50 | 3.50 |
| Colloidal silica | Bindzil CC401 from AkzoNobel | 5.00 | - | - | - | - | - | - |
| Colloidal silica | Levasil 30/50 from AkzoNobel | - | 5.00 | - | - | - | - | - |
| Colloidal silica | Bindzil CAT80 from AkzoNobel | - | - | 5.00 | 2.00 | 20.00 | - | - |
| Abrasive Silica | Sorbosil AC77 from PQ Corporation | - | - | - | - | - | 5.00 | - |
| Abrasive CaCO₃ | Calcite, 800 grit, from Zhangjiajie Hengliang Mining Co. Ltd. | - | - | - | - | - | - | 5.00 |
| Amodimethicone | Dow Corning® 2-8168 microemulsion | 0.50 | 0.50 | 0.50 | 0.50 | 0.50 | 0.50 | 0.50 |
| De-ionized water | - | To 100 | To 100 | To 100 | To 100 | To 100 | To 100 | To 100 |

Random scratches on new black poly(methyl methacrylate) (PMMA) tiles (10cm×10cm) were generated on its central 3.5cm×3.5cm area by employing a Martindale abrasion and pilling tester (M235, SDL Atlas, UK) under a load pressure of 10 KPa and abrasion speed of 71.3 rpm.

The gloss of the damaged PMMA tiles was measured by a glossmeter (Multi gloss 268plus gloss meter, Konica Minolta Optics Inc., Japan).

The damaged PMMA tiles were treated by the sample in Table 1 respectively in same manner. Then, the glosses of the tiles were measured again. The gloss of the tiles before and after treatment was recorded in Table 2.

**Table 2**

| Samples | Gloss | | |
|---|---|---|---|
| | Before treatment (G_{b}) | After treatment (Gₐ) | Increase (ΔG = Gₐ -G_{b}) |
| 1 | 62.20 | 67.83 | 5.63 |
| 2 | 61.63 | 72.77 | 11.14 |
| 3 | 58.67 | 76.90 | 18.23 |
| 4 | 58.27 | 68.47 | 10.2 |
| 5 | 57.53 | 79.77 | 22.24 |
| A | 61.60 | 77.90 | 16.3 |
| B | 58.97 | 75.40 | 16.43 |

As can be seen from Table 2, the compositions containing either colloidal particle or abrasives are capable of enhancing the surface gloss. In addition, it was found that Bindzil CAT80 can improve the gloss more than abrasives.

### Example 2

This example demonstrates the gloss change of new/smooth hard surface after treatment by composition containing different particles.

The experiments were conducted in a similar manner as described in Example 1 except that new black poly(methyl methacrylate) tiles (10cm×10cm) were employed for test.

**Table 3**

| Samples | Gloss | | |
|---|---|---|---|
| | Before treatment | After treatment | Increase (ΔG) |
| 3 | 86.00 | 85.93 | -0.07 |
| A | 86.00 | 79.00 | -7.00 |
| B | 86.00 | 76.87 | -9.13 |

It was found from Table 3 that the abrasives decreased the gloss of new tiles, indicated that the tiles were damaged. In contrast, the gloss of new tiles remained almost same after treated by composition of the present invention, showing that the composition of the present invention generally did not bring damage to the new/smooth surface.

### Example 3

This example demonstrates the gloss increase of hard surface after treatment by composition containing different polymers.

The experiments were conducted in a similar manner described in Example 1. The gloss increases were shown in last row of Table 4.

**Table 4**

| Chemical name | Trade name | Samples (active% by weight) | | | | |
|---|---|---|---|---|---|---|
| | | C | 6 | 7 | 8 | 9 |
| Colloidal silica | Bindzil CAT80 | 5.00 | 5.00 | 5.00 | 5.00 | 5.00 |
| - | Modisurf | 0.50 | - | - | - | - |
| - | SF-929A Finishing Agent | - | 0.50 | - | - | - |
| Amodimethi cone | Dow Corning® 2-8168 microemulsion | - | - | 0.50 | 0.10 | 1.00 |
| De-ionized water | - | To 100 | To 100 | To 100 | To 100 | To 100 |
| | | | | | | |
| Gross increase (ΔG) | | 5.7 | 13.4 | 17.2 | 17.9 | 10.6 |

This data shows that the gloss was increased much more by composition containing non-volatile silicone than by composition containing other polymers. In addition, composition containing aminosilicone enhanced the gloss more than composition containing other non-volatile silicone.

### Example 4

This example demonstrates the effect of the weight ratio of silica to silicone on gloss increase.

The experiments were conducted in a similar manner described in Example 1. The gloss increases were shown in last row of Table 5.

**Table 5**

| Chemical name | Trade name | Samples (active% by weight) | | |
|---|---|---|---|---|
| | | 4 | D | E |
| Primary alcohol ethoxylate | Neodel 91-8 from Shell | 3.50 | 3.50 | 3.50 |
| Colloidal silica | Bindzil CAT80 from AkzoNobel | 2.00 | 0.50 | 1.25 |
| Amodimethicone | Dow Corning® 2-8168 microemulsion | 0.50 | 2.00 | 1.25 |
| De-ionized water | - | To 100 | To 100 | To 100 |
| | | | | |
| Gross increase (ΔG) | | 10.2 | 2.1 | 2.6 |

The data shows that the gloss was increased much more when the weight ratio of the particle to the non-volatile silicone is at least 3:1.

## Claims

1. A hard surface treatment composition comprising:
a) particle having particle size of no greater than 3 microns;
b) non-volatile silicone; and
c) at least 30% of water by weight of the composition,
wherein the weight ratio of the particle to the non-volatile silicone is at least 3:1.

2. The composition according to claim 1 wherein the particle has particle size of from 1 nm to 2 µm, preferably from 15 nm to 500 nm.

3. The composition according to claim 1 or 2 wherein the particle is present in amount of from 0.1 to 30% by weight of the composition, preferably from 1 to 12% by weight of the composition.

4. The composition according to any one of the preceding claims wherein the particle comprises silica, titania, zirconia, alumina, calcium carbonate, silicate clay, or a mixture thereof, preferably comprises alumina coated silica.

5. The composition according to any one of the preceding claims wherein the non-volatile silicone has a weight average molecular weight of 2,000 to 2,000,000, preferably from 8,000 to 800,000, more preferably from 20,000 to 400,000, and even more preferably from 50,000 to 150,000 Daltons.

6. The composition according to any one of the preceding claims wherein the non-volatile silicone comprises aminosilicone and preferably is aminosilicone.

7. The composition according to any one of the preceding claims wherein the non-volatile silicone is present in amount of 0.01 to 5% by weight of the composition, preferably from 0.05 to 0.9%.

8. The composition according to any one of the preceding claims wherein the weight ratio of the particle to the non-volatile silicone is in the range of 4:1 to 100:1, preferably from 7:1 to 20:1.

9. The composition according to any one of the preceding claims wherein the composition comprises non-ionic surfactant, preferably primary alcohol ethoxylate.

10. The composition according to claim 9 wherein the non-ionic surfactant is present in amount of 0.1 to 15% by weight of the composition, preferably from 0.5 to 8% by weight of the composition.

11. The composition according to claim 9 or 10 wherein the weight ratio of the particle to the non-ionic surfactant is in the range of 1:10 to 15:1, preferably from 0.4:1 to 3:1.

12. The composition according to any one of the preceding claims wherein the composition comprises organic solvents selected from C₁₋₈ alcohol, ether having 2 to 16 carbon atoms, ester of C₂₋₂₄ organic acid, C₆₋₁₈ cyclic terpene, and a mixture thereof, preferably the composition comprises ethanol, isopropyl alcohol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol, soybean oil methyl ester, limonene, or a mixture thereof.

13. A method for providing shine, smoothness, repair and/or less damage to a hard surface comprising a step of contacting the hard surface with a composition according to any one of claims 1 to 12, comprising particles having average diameter of no greater than 3 microns, and non-volatile silicones.

14. Use of the composition according to any one of claims 1 to 12, comprising colloidal particles having average diameter of no greater than 3 microns, and non-volatile silicones for surface shine, surface smoothness, surface repair, less damage, or a combination thereof.

## Patentansprüche

1. Zusammensetzung zur Behandlung harter Oberflächen, umfassend:
a) Teilchen einer Teilchengröße von nicht größer als 3 Mikron;
b) nicht-flüchtiges Silikon; und
c) mindestens 30% Wasser, bezogen auf das Gewicht der Zusammensetzung,
wobei das Gewichtsverhältnis der Teilchen zu dem nicht-flüchtigen Silikon mindestens 3:1 beträgt.

2. Zusammensetzung nach Anspruch 1, wobei das Teilchen eine Teilchengröße von 1 nm bis 2 µm, vorzugsweise von 15 nm bis 500 nm, aufweist.

3. Zusammensetzung nach Anspruch 1 oder 2, wobei das Teilchen in einer Menge von 0,1 bis 30%, bezogen auf das Gewicht der Zusammensetzung, vorzugsweise von 1 bis 12%, bezogen auf das Gewicht der Zusammensetzung, vorliegt.

4. Zusammensetzung nach irgendeinem der vorhergehenden Ansprüche, wobei das Teilchen Siliciumdioxid, Titandioxid, Zirkoniumdioxid, Aluminiumoxid, Calciumcarbonat, Silikatton oder eine Mischung davon, vorzugsweise mit Aluminiumoxid beschichtetes Siliciumdioxid, umfasst.

5. Zusammensetzung nach irgendeinem der vorhergehenden Ansprüche, wobei das nicht-flüchtige Silikon ein gewichtsmittleres Molekulargewicht von 2.000 bis 2.000.000, vorzugsweise von 8.000 bis 800.000, bevorzugter von 20.000 bis 400.000, und sogar bevorzugter von 50.000 bis 150.000 Daltons, aufweist.

6. Zusammensetzung nach irgendeinem der vorhergehenden Ansprüche, wobei das nicht-flüchtige Silikon Aminosilikon umfasst und vorzugsweise Aminosilikon ist.

7. Zusammensetzung nach irgendeinem der vorhergehenden Ansprüche, wobei das nicht-flüchtige Silikon in einer Menge von 0,01 bis 5%, bezogen auf das Gewicht der Zusammensetzung, vorzugsweise von 0,05 bis 0,9%, vorliegt.

8. Zusammensetzung nach irgendeinem der vorhergehenden Ansprüche, wobei das Gewichtsverhältnis des Teilchens zu dem nicht-flüchtigen Silikon in dem Bereich von 4:1 bis 100:1, vorzugsweise von 7:1 bis 20:1, liegt.

9. Zusammensetzung nach irgendeinem der vorhergehenden Ansprüche, wobei die Zusammensetzung nicht-ionisches Tensid, vorzugsweise primäres Alkoholethoxylat, umfasst.

10. Zusammensetzung nach Anspruch 9, wobei das nicht-ionische Tensid in einer Menge von 0,1 bis 15%, bezogen auf das Gewicht der Zusammensetzung, vorzugsweise von 0,5 bis 8%, bezogen auf das Gewicht der Zusammensetzung, vorliegt.

11. Zusammensetzung nach Anspruch 9 oder 10, wobei das Gewichtsverhältnis des Teilchens zu dem nicht-ionischen Tensid in dem Bereich von 1:10 bis 15:1, vorzugsweise von 0,4:1 bis 3:1, liegt.

12. Zusammensetzung nach irgendeinem der vorhergehenden Ansprüche, wobei die Zusammensetzung umfasst organische Lösungsmittel, ausgewählt unter C₁₋₈-Alkohol, Ether mit 2 bis 16 Kohlenstoffatomen, Ester der organischen C₂₋₂₄-Säure, cyclischem C₆₋₁₈-Terpen und Mischungen davon, wobei Zusammensetzung vorzugsweise umfasst Ethanol, Isopropylalkohol, Dipropylenglycol, Diethylenglycolmonobutylether, Dipropylenglycolmonobutylether, Propylenglycolmonomethylether, Propylenglycolmonopropylether, Methylester der Caprylsäure, Methylester der Heptansäure, Dimethyl-2-methylglutarat, Ester von Polyglycerin, Sojaölmethylester, Limonen oder eine Mischung davon.

13. Verfahren zum Versehen einer harten Oberfläche mit Glanz, Glätte, Reparatur und/oder weniger Schaden, umfassend einen Schritt des Inkontaktbringens der harten Oberfläche mit einer Zusammensetzung nach irgendeinem der Ansprüche 1 bis 12, umfassend Teilchen eines durchschnittlichen Durchmessers von nicht mehr als 3 Mikron und nicht-flüchtige Silikone.

14. Verwendung einer Zusammensetzung nach irgendeinem der Ansprüche 1 bis 12, umfassend kolloidale Teilchen eines durchschnittlichen Durchmessers von nicht mehr als 3 Mikron und nicht-flüchtige Silikone für Oberflächenglanz, Oberflächenglätte, Oberflächenreparatur, weniger Schaden oder einer Kombination davon.

## Revendications

1. Composition de traitement de surface dure comprenant :
a) une particule présentant une taille de particule d'au plus 3 microns ;
b) du silicone non-volatil ; et
c) au moins 30 % d'eau en masse de la composition,
dans laquelle le rapport en masse de la particule au silicone non-volatil est d'au moins 3:1.

2. Composition selon la revendication 1, dans laquelle la particule présente une taille de particule de 1 nm à 2 µm, de préférence de 15 nm à 500 nm.

3. Composition selon la revendication 1 ou 2, dans laquelle la particule est présente dans une quantité de 0,1 à 30 % en masse de la composition, de préférence de 1 à 12 % en masse de la composition.

4. Composition selon l'une quelconque des revendications précédentes, dans laquelle la particule comprend de la silice, de l'oxyde de titane, de l'oxyde de zirconium, de l'alumine, du carbonate de calcium, de l'argile de silicate, ou un mélange de ceux-ci, comprend de préférence de la silice revêtue d'alumine.

5. Composition selon l'une quelconque des revendications précédentes, dans laquelle le silicone non-volatil présente une masse moléculaire moyenne en masse de 2 000 à 2 000 000, de préférence de 8 000 à 800 000, encore mieux de 20 000 à 400 000, et bien mieux encore de 50 000 à 150 000 Daltons.

6. Composition selon l'une quelconque des revendications précédentes, dans laquelle le silicone non-volatil comprend un aminosilicone et est de préférence un aminosilicone.

7. Composition selon l'une quelconque des revendications précédentes, dans laquelle le silicone non-volatil est présent dans une quantité de 0,01 à 5 % en masse de la composition, de préférence de 0,05 à 0,9 %.

8. Composition selon l'une quelconque des revendications précédentes, dans laquelle le rapport massique de la particule au silicone non-volatil se trouve dans l'intervalle de 4:1 à 100:1, de préférence de 7:1 à 20:1.

9. Composition selon l'une quelconque des revendications précédentes, dans laquelle la composition comprend un tensioactif non-ionique, de préférence un éthoxylate d'alcool primaire.

10. Composition selon la revendication 9, dans laquelle le tensioactif non-ionique est présent dans une quantité de 0,1 à 15 % en masse de la composition, de préférence de 0,5 à 8 % en masse de la composition.

11. Composition selon la revendication 9 ou 10, dans laquelle le rapport massique de la particule au tensioactif non-ionique se trouve dans l'intervalle de 1:10 à 15:1, de préférence de 0,4:1 à 3:1.

12. Composition selon l'une quelconque des revendications précédentes, dans laquelle la composition comprend des solvants organiques choisis parmi un alcool en C₁₋₈, éther ayant de 2 à 16 atomes de carbone, ester d'acide organique en C₂₋₂₄, terpène cyclique en C₆₋₁₈, et un mélange de ceux-ci, la composition comprend de préférence de l'éthanol, alcool isopropylique, dipropylène glycol, monobutyléther de diéthylène glycol, monobutyléther de dipropylène glycol, monométhyléther de propylène glycol, monopropyléther de propylène glycol, ester méthylique d'acide caprylique, ester méthylique d'acide heptylique, glutarate de diméthyl-2-méthyle, esters de polyglycérol, ester méthylique d'huile de soja, limonène, ou un mélange de ceux-ci.

13. Procédé pour fournir un brillant, un lissé, une réparation et/ou une détérioration moindre à une surface dure comprenant une étape de mise en contact de la surface dure avec une composition selon l'une quelconque des revendications 1 à 12, comprenant des particules ayant un diamètre moyen d'au plus 3 microns, et des silicones non-volatils.

14. Utilisation de la composition selon l'une quelconque des revendications 1 à 12, comprenant des particules colloïdales ayant un diamètre moyen d'au plus 3 microns, et des silicones non-volatils pour un brillant de surface, un lissé de surface, une réparation de surface, une détérioration moindre, ou une combinaison de ceux-ci.
